Europäisches Patentamt

European Patent Office (11) Publication number: **0 308 554**

Office européen des brevets A1

(12) **EUROPEAN PATENT APPLICATION**

(21) Application number: 87308449.5

(22) Date of filing: 24.09.87

(51) Int. Cl.⁴: **F16K 13/00** , **F16K 5/04** ,
**F16K 25/04**

(43) Date of publication of application:
29.03.89 Bulletin 89/13

(84) Designated Contracting States:
AT CH DE ES FR IT LI NL SE

(71) Applicant: GEOFLOW INTERNATIONAL PTY
LTD.
1st Floor 138 Whitehorse Road
Blackburn Victoria 3130(AU)

(72) Inventor: Kelsey, Christopher George
2/83 Albert Street
Hornsby New South Wales 2077(AU)
Inventor: McKenzie, Ian Roy
5 Brentwood Road
Flinders Park 5025(AU)

(74) Representative: Long, Edward Anthony et al
Hulse & Co. Cavendish Buildings West
Street
Sheffield S1 1ZZ(GB)

(54) Improved valve.

(57) A fluid control valve has two cylinders arranged
parallel to each other with their surfaces in contact.
At least one of the cylinders has a groove formed in
its surface extending partially around the circum-
ference and varying in depth along its extent to
define an aperture for fluid to flow through. This
aperture can be varied in size by rotating the cyl-
inders thereby controlling the flow rate of fluid
through the valve. The cylinders are rotated in the
same direction such that their contact surfaces move
in opposite directions. This arrangement provides a
wiping action to reduce the likelihood of jamming
when the valve is operated. The cylinders are rotat-
ed by three interengaging pinion gears driven by
suitable drive means.

Fig 4

## IMPROVED VALVE

### FIELD OF THE INVENTION AND BACKGROUND ART

This invention relates to an improvement in valves of the kind described in U.K. patent specification 2.056.027 (equivalent to Australian application 60,736 80) in which a pair of cylinders are arranged parallel to each other with their circumferential surfaces in contact, and, at least, one of the cylinders is provided with a circumferentially extending groove, the groove or grooves of the cylinders defining an aperture for fluid flow, the cross section of the groove varying along its extent whereby rotation of the cylinders will vary the rate of flow of fluid through the valve by varying the size of said aperture.

Valves of this kind were developed for use in association with flexible pipes or conduits especially where the fluid flowing through the conduit contains highly abrasive materials.

When used with fluids containing particles of a critical size and hardness, it may occur that valves of the kind above described suffer from jamming as particles become caught between the cylinders when these are rotated to change the rate of flow. An object of the present invention is to minimise the danger of such jamming.

### SUMMARY OF THE INVENTION

The present invention envisages a valve for fluid conduits, said valve including two cylinders arranged parallel to each other with their circumferential surfaces in contact, at least one of said cylinders having a circumferentially extending groove formed in the surface thereof the depth of which varies along its length, said cylinders at the or each groove defining an aperture through which in use, fluid is constrained to pass, whereby upon rotation of said cylinders relative to each other the size of the aperture varies to control the rate of flow of fluid through said valve, characterised in that the direction of rotation of said cylinders is the same so that said contacting surfaces move in opposite directions. Thus the contacting surfaces on either side of the groove or grooves are constrained to move in opposite directions to thereby provide a wiping action which reduces the likelihood of jamming upon operation of the valve.

### BRIEF DESCRIPTION OF THE DRAWINGS

In order that the invention may be more readily understood it will now be described by way of example with reference to the accompanying drawings in which:

Figure 1 is an external view in end elevation of a valve according to the invention;

Figure 2 is a cross-sectional view along section C of Figure 1;

Figure 3 is a plan view of the valve of Figure 1; and

Figure 4 is a cross-sectional view along section A of Figure 2.

### DETAILED DESCRIPTION OF THE PREFERRED EMBODIMENT

The valve has a casing 10 made from a suitable metal which may be aluminium. The casing 10 has lower cover 14 and upper cover 16 joined by intermemdiate plate 15. Within the casing there is a valve chamber having a lining 12 made from a corrosion - and abrasion - resistant material such as polyurethane. The lower and upper covers 14 and 16 of the casing are provided with recesses which locate the upper ends of the shafts 20 and 22.

Valve cylinders 24 and 26 are moulded from a suitable material such as polyurethane or stainless steel depending on their use directly onto shafts 20 and 22, and are prevented from rotation relative to the shafts by keys 31. In a situation where corrosive material is likely to be encountered, the shafts 20, 22 are preferably made from stainless steel.

Pinion gears 28, 30 preferably made from nylon, are mounted on the upper end of respective shafts 20 and 22, and are fixed for rotation with the shafts by means of keys 35 and 37.

Interposed between and intermeshing with gears 28 and 30 is a pinion 32 mounted on a shaft 33 extending from the casing 10. The gears 28 and 30 have an identical number of teeth.

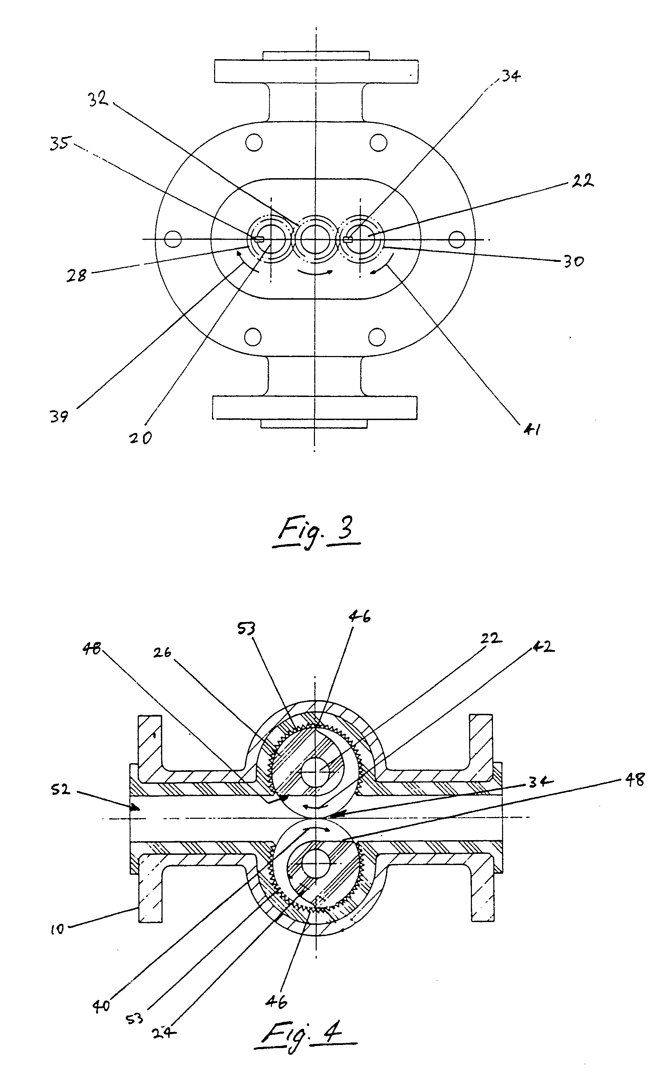

The shafts 20 and 22 are therefore constrained to rotate in the same direction as shown by arrows 39, 41 in Figure 3, so that during opening or closing movement of the valve cylinders the respective contacting surfaces 34, 36 of the valve cylinders move in opposite directions, as shown by arrows 40 and 42 in Figure 4. This provides a wiping action between the opposed surfaces 34 and 36 of the valve cylinders tending to reduce the risk of jamming during operation of the valve.

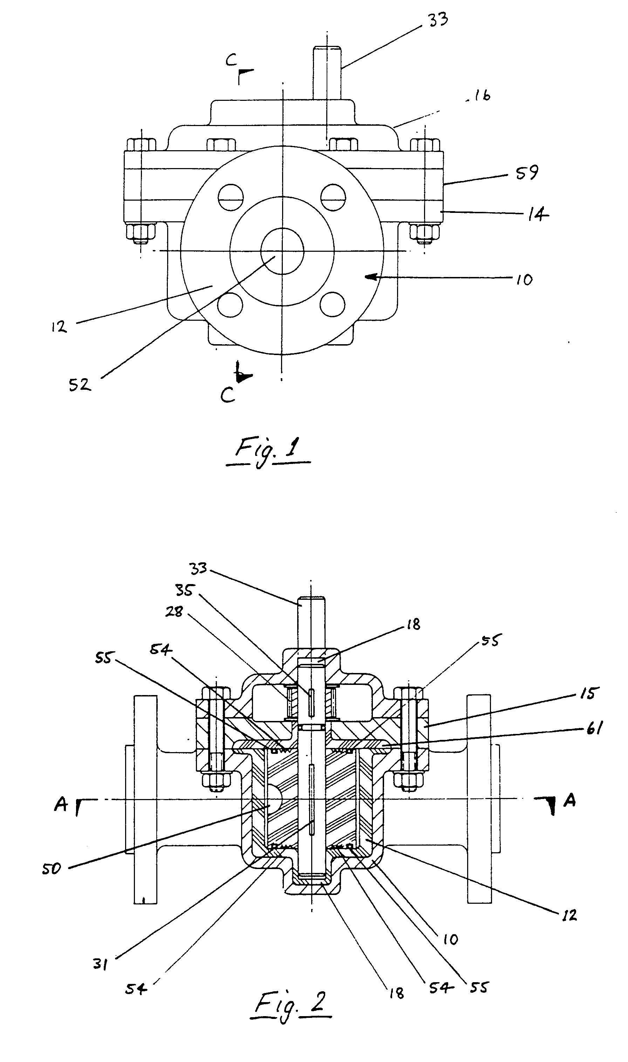

As best shown in Figures 2 and 4, each of the valve cylinders 24, 26 has a groove of varying cross-section formed around its periphery. Each groove has a minimum depth at point 46 (see Figure 4) and a maximum depth at point 48. The cross-section of each groove is preferably semi-circular and the meshing of the gears 28, 30 and 32 is so arranged that points 46 of the respective valve cylinders are in contact when the valve is closed.

By operation of the shaft 33 to rotate gears 28, 30 and 32, shafts 20, 22 and valve cylinders 24, 26, it is possible to produce an in-line flow aperture 50 of circular cross-section having a diameter from zero to a maximum value equal to the internal diameter of the input-output passages 52.

To seal the valve cylinders 24, 26 in the valve chamber 10, the surface of valve chamber lining 12 which contacts the valve cylinders 24, 26 has a series of serrations 53 (see Figure 4) formed in it parallel to the axes of the shafts 20, 22. The relative dimensions of the valve cylinders 24, 26 are selected to provide a slight pressure between the crests of the serrations and the external surfaces of the valve cylinders.

The sealing of the valve cylinders 24, 26 in the valve chamber is also assisted by the provision of annular serrations 54 (see Figure 2) on the upper and lower surfaces of each valve cylinder 24, 26. "O" rings 55 may also be provided for this purpose.

"O" rings 57 provide a seal between valve chamber with lining 12 and upper chamber defined by cover 16. Lining 16 preferably of polyurethane provides a seal support for "O" rings 57 and bearing support for intermediate plate 59 and shafts 20, 22.

The illustrated valve is provided with coupling flanges 56, although of course other coupling means may be employed.

## Claims

1. A valve for fluid conduits, said valve including two cylinders (24, 26) arranged parallel to each other with their circumferential surfaces in contact, at least one of said cylinders having a circumferentially extending groove formed in the surface thereof the depth of which varies along its length, said cylinders at the or each groove defining an aperture (50) through which in use, fluid is constrained to pass, whereby upon rotation of said cylinders relative to each other the size of the aperture varies to control the rate of flow of fluid through said valve, characterised in that the direction of rotation (40, 42) of said cylinders is the same so that said contacting surfaces move in opposite directions.

2. A valve as claimed in claim 1, wherein a groove is provided in the surface of each of said cylinders, said grooves being opposed to define said aperture.

3. A valve as claimed in claim 1 wherein drive means (28, 30, 32) are provided to rotate said cylinders in unison and in said same direction.

4. A valve as claimed in claim 3 wherein said cylinders have extended support shafts (20, 22) formed integrally therewith, or attached thereto, and said drive means comprise a pair of pinion gears 928, 30) carried by the respective shaft extensions, each meshing with a third pinion gear (32) interposed therebetween.

Fig. 1

Fig. 2

_Fig. 3_

_Fig. 4_

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 4) |
|---|---|---|---|
| A | FR-A-1 323 988  (KINEMATICS LTD) --- | | F 16 K  13/00 |
| A | US-A-1 820 075  (E.S. KING) --- | | F 16 K   5/04 |
| A | US-A-1 839 672  (W.H. HAMON) --- | | F 16 K  25/04 |
| A | US-A-2 029 105  (UNIVERSAL OIL PRODUCTS CO.) ----- | | |

TECHNICAL FIELDS
SEARCHED (Int. Cl.4)

F 16 K  13/00
F 16 K   5/00
F 16 K  47/00
F 16 L  55/00

The present search report has been drawn up for all claims

| Place of search | Date of completion of the search | Examiner |
|---|---|---|
| THE HAGUE | 23-06-1988 | DE SMET F.P. |

EPO FORM 1503 03.82 (P0401)